# EUROPEAN PATENT APPLICATION

(11) **EP 0 747 604 A1**
(43) Date of publication of application: **11.12.1996**
(21) Application number: 96304076.1
(22) Date of filing: 04.06.1996
(51) Int. Cl.: F16B 21/09, F16B 35/04, E05B 9/08

(54) **Mounting bolts**

(30) Priority: 10.06.1995 GB 9511822
(71) Applicant: ROCKWELL LIGHT VEHICLE SYSTEMS (UK) LIMITED, Birmingham B30 3DW (GB)
(72) Inventor: Spurr, Nigel, Hall Green, Birmingham B28 0RP (GB)
(74) Representative: Spruce, George Philip

(57) **Abstract**

Mounting bolts (Fig.1) for securing a first component, typically a vehicle door latch unit 10, to a second embodiment, typically an interior structural member 18 of a vehicle door 20, are provided with a threaded stem 26 screwed through tappings 22 of the first component and heads 28 which are inserted, on assembly, through keyhole 34 or the like in the second component. The outwardly directed free ends of the bolts have drive formations, for example "Allen" type hexagon sockets 30 engageable by a drive tool 32 for screwing the components together.

## Description

This invention relates to screwthreaded mounting bolts for securing components of an assembly together, particularly for use in assemblies where the mounting location is accessible from one side only; a typical example being the mounting of a latch unit or the like on the interior structural members of a vehicle door or other vehicle body component.

Conventionally, the difficulties of securing a first component such as a flanged housing of a vehicle door latch unit to a second component such as a pressed metal structural member within a vehicle door accessible only from the side to which the first component is to be attached can only conveniently be overcome by permanent or semi-permanent processes such as welding or blind rivetting, or by forming tapped holes in the structural member or other second component itself if it is of sufficient gauge, or more usually attaching captive threaded nuts or the like at required locations to receive conventional threaded screws or bolts.

The use of screws or bolts is desirable to facilitate subsequent dis-assembly if necessary but the provision of tapped holes or captive nuts in or on the structural member or the like adds to production costs and can also cause assembly delays unless their positioning is controlled to close tolerances to match the latch body or the like.

The object of the invention is to provide a mounting bolt which is simple and economical to produce and which substantially reduces assembly time and costs.

According to one aspect of the invention there is provided a mounting bolt for releasably securing a first component to a second component comprising a stem having a greater cross-section head at one end, a male screw thread formed along at least part of the stem extending from the other end thereof towards the head, and a drive formation on or in said other end engagable by a tool for rotation of the bolt; whereby the threaded other end of the stem can be operatively screwed through a female threaded bore of the first component from the rear so that the drive formation is directed outwardly thereof before the head is engaged against a rear face portion of the second component by insertion into or through an appropriate slot or aperture provided therein, the bolt then being tightened to draw the components together by means of said tool.

According to another aspect the invention provides a method of releasably securing a first component, for example a vehicle door or other body closure latch unit, to a second component, for example a structural member of a said vehicle door or other body closure, where only an outer face of the latter component against which the first component is to abut is readily accessible including the steps of providing at least one mounting bolt as defined by the last preceding paragraph hereof, screwing the threaded stem thereof through a threaded bore of the first component from the rear so that the drive formation is directed outwardly thereof, inserting the head into or through a complimentary slot or aperture of the second component from the front so that the head is engaged with a rear face thereof, and tightening the bolt by engaging a driving tool with the drive formation to draw the components together.

An example of the invention is now more particularly described with reference to the accompany drawings wherein:-
Figure 1 is an exploded perspective view of components of a vehicle body in course of assembly, and
Figure 2 is a vertical section of parts of said components.

This example of the invention shows its application to the assembly of a latch unit within a vehicle door though it is to be understood that it is equally applicable to the mounting together of other components in the field of access control systems for vehicles such as mounting window winders, locks, latches and/or powered or other actuators therefor, or mounting other components in or on vehicles and other assemblies.

A vehicle door latch unit 10 comprises a pressed sheet metal base plate 12 mounting the latch mechanism within a housing 14. Base plate 12 extends laterally beyond housing 14 so as to provide a pair of mounting flanges 16.

This first component constituted by latch unit 10 is to be operatively secured to the front of a pressed metal structural member 18 of a pre-assembled door carcass 20 (shown in part only in the drawings). Latch unit 10 and related mechanism and components (not shown) are finally covered within the door by an interior trim panel (not shown) in conventional manner.

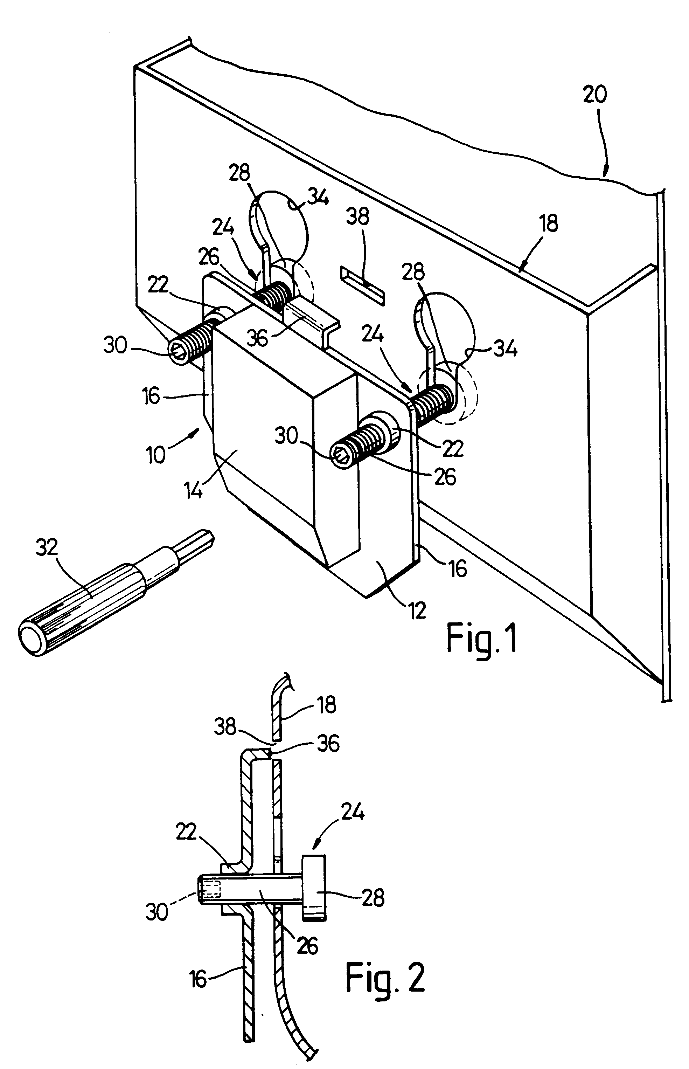

Member 18 is closely spaced from the outer sheet metal skin and or other parts of the door carcass 20 i.e. there is no easy access to the rear face (as viewed in Figure 1) of member 18 as would be needed for inserting, positioning or tightening screws, nuts or other fastening elements from its rear.

Each flange 16, in the example shown, is provided with a respective tapped through hole forming a female thread. To provide an adequate length of thread, plate 12 is shaped to provide an outwardly projecting collar 22 in known manner in which said thread is tapped.

A bolt 24 is screwed part-way into each collar 22 from the rear as viewed in Figure 1 prior to final assembly.

Each bolt 24 has an externally threaded stem 26 of uniform diameter terminating at one end in an increased diameter head 28. The other end of stem 26 remote from head 28 is provided with a female drive socket 30, in this example of hexagon cross-section.

A hand or power driven rotary tool 32 is provided having a hexagon end for driving engagement with each bolt socket 30. The socket and matching tool hexagon may be of standard "Allen" key dimensions though it is to be understood that other forms of socket, e.g. square in section, or other shapes of drive formation and tool may be employed such as a cross groove to accommodate a conventional flat bladed screwdriver, or other standard threaded fastener drive formations such as "Phillips" or like screw or bolt head formations, the only requirement being that they do not prevent insertion of the threaded stem end into its mating threaded bore.

For some applications the drive formation may be male, for example a lesser diameter hexagonal tip on stem 26 for engagement by a female socketed tool such as a hexagon wrench.

Structural member 18 of the door is provided with a pair of keyhole slots 34 centred to correspond with the spacing of threaded collars 22, the wider portions of said slots, uppermost in the example, being sized to allow heads 28 to pass therethrough while the narrower lower parts of slots 34 are only wide enough to accommodate the diameter of the stems 26 so that heads 28 engage the rear face of member 18.

For added security of assembly the upper edge of plate 12 is provided with a central rearwardly projecting locating tab 36 and a mating tab slot 38 is provided in member 18.

When bolts 24 have been positioned in the keyhole slots 34 as shown in Figure 1 bolts 24 are tightened using tool 32 to screw them outwardly, thus drawing latch unit 10 into facewise abutment with member 18. As bolts 24 reach the end of their travel, tab 36 is entered in tab slot 38, thus when the two components are fully secured any upward displacement of unit 10 lengthwise of the keyhole slots 34 is prevented.

The described arrangement greatly facilitates assembly, latch units 10 can be supplied to the door assembly line with bolts 24 already in place ready for tightening so that they can speedily be inserted into slots 34 and positively positioned for secure mounting using only one simple tool and with no loose parts involved in the final assembly.

The invention provides a particularly strong attachment compared with use of such fasteners as blind rivets or self-tapping screws and if repair or replacement is needed the latch unit 10 can readily be dismounted and re-attached without damage and using a simple tool available in almost any repair shop.

It will be understood that for some applications a single bolt 24 may be sufficient, possibly along with one or more locating tabs 36, while for more secure attachment more than two bolts may be provided.

## Claims

1. A mounting bolt (24) for releasably securing a first component (10) to a second component (20) comprising a stem (26) having a greater cross-section head (28) at one end, and a male screw thread formed along at least part of the stem extending from the other end thereof towards the head; characterised by a drive formation (30) on or in said other end engagable by a tool (32) for rotation of the bolt; whereby the threaded other end of the stem can be operatively screwed through a female threaded bore (22) of the first component from the rear so that the drive formation is directed outwardly thereof before the head is engaged against a rear face portion of the second component by insertion into or through an appropriate slot or aperture (34) provided therein, the bolt then being tightened to draw the components together by means of said tool.

2. An assembly comprising first and second components (10,20) and at least one mounting bolt (24) for releasably securing the components together, said bolt having a stem (26) with a greater cross-section head (28) at one end, a male screw thread along at least part of the stem extending from the other end thereof towards the head; characterised in that the bolt has a drive formation (30) on or in said other end engageable by a tool (32) for rotation of the bolt; and in that the threaded stem is screwed through a female threaded bore (22) of the first component from the rear so that the drive formation is directed outwardly thereof and the head is engaged against a rear face portion of the second component by insertion into or through an appropriate slot or aperture (34) therein, the components being secured together by the tightening of the bolt.

3. An assembly as in Claim 2 characterised in that the first component (10) is part of a vehicle door latch unit or other access control sub-assembly and the second component (20) is part of the door structure.

4. A method of releasably securing a first component (10) for example a vehicle door or other body closure latch unit, to a second component (20), for example a structural member of a said vehicle door or other body closure, where only an outer face of the latter component against which the first component is to abut is readily accessible characterised by the steps of providing at least one mounting bolt as defined by Claim 1 hereof, screwing the threaded stem (26) thereof through a threaded bore (22) of the first component from the rear so that the drive formation (30) is directed outwardly thereof, inserting the head (28) into or through a complimentary slot or aperture (30) of the second component from the front so that the head is engaged with a rear face thereof, and tightening the bolt by engaging a driving tool (32) with the drive formation to draw the components together.
